# EUROPEAN PATENT SPECIFICATION

(11) **EP 4 280 859 B1**
(45) Date of publication and mention of the grant of the patent: **05.06.2024**
(21) Application number: 21836084.0
(22) Date of filing: 08.12.2021
(51) Int. Cl.: A01G 3/02

(54) **CUTTING TOOL**
SCHNEIDWERKZEUG
OUTIL DE COUPE

(30) Priority: 22.03.2021 EP 21163963
(43) Date of publication of application: 29.11.2023
(73) Proprietor: HUSQVARNA AB, 561 82 Huskvarna (SE)
(72) Inventor: KOHL, Peter, 89257 Illertissen (DE)
(74) Representative: Finkele, Rolf
(86) International application number: PCT/EP2021/084795
(87) International publication number: WO 2022/199872

(56) References cited:
- DE-U1-202013 102 815
- FR-A- 339 439
- US-A- 3 323 209

## Description

### TECHNICAL FIELD

The present disclosure relates to a cutting tool.

### BACKGROUND

Cutting tools such as secateurs are used for cutting, pruning, and shearing branches (say the small branches) in gardening application. Generally, the cutting tool with an anvil is used for cutting old, dry, and thick branches, while the cutting tool with a bypass blade is used to cut fresh, and thin branches. However, the cutting tool with the anvil may not accurately cut the fresh, and thinner branches. Further, the cutting tool with the bypass blade may not provide sufficient cutting force on the old, dry, and thicker branches. Hence, there is need of the single cutting tool with the fixed anvil and the adjustable bypass blade to perform the cutting operations accurately and efficiently. Moreover, there are limitations to keep, carry and maintain separate cutting tools each for the fixed anvil and the adjustable bypass blade to perform the desired cutting operations.

An example of a pruner is provided in United States Patent 3,323,209 (hereinafter referred to as '209 reference). The '209 reference discloses the pruner with a pair of handles biased apart by a coil spring. One of the handles includes a unitary offset cutting blade and the other handle includes a unitary offset jaw provided with an anvil mounted in a slot and a flat surface. When the pruner is to be used, a limb, twig or the like is placed between the cutting blade and the anvil. The handles and thus the cutting blade and the anvil are moved towards each other to initiate the cutting action. The '209 reference discloses the pruner with provisions for only one type of cutting action and thus has limited utility.

Another example of a hand pruner is provided in European Patent application 0,696,415 (hereinafter referred to as '415 reference). The '415 reference discloses the hand pruner which provides a maximum force on a pair of blades when a pair of handles are closed halfway. The hand pruner includes a compound linkage mechanism which generates a much greater cutting force at the intermediate point of travel of the blades. The hand pruner also includes an anvil plate and a bypass blade. However, the '415 reference discloses two types of different arrangements of the hand pruner. In a first arrangement, the hand pruner includes the anvil plate which is fastened to the one of the handles using mechanical fasteners. In a second arrangement, the hand pruner includes the bypass blade which is fastened to the one of the handles using mechanical fasteners. Thus, the user needs to fasten the anvil plate or the bypass blade to use the hand pruner in the first arrangement or in the second arrangement, respectively. This may involve substantial effort, and skill for common users, along with access and usage of different tools for assembly/disassembly of one or more of the anvil plate or the bypass blade with the hand pruner. Further, such changes or assembly/disassembly of the anvil plate or the bypass blade may lead to loss of productivity, and substantial downtime. This may be due to a need to switch between the first arrangement and the second arrangement to make use of the anvil plate or the bypass blade, respectively.

### SUMMARY

In view of the above, it is an objective of the present disclosure to solve or at least reduce the drawbacks discussed above. The invention is achieved with the cutting tool of claim 1.

Thus, the present disclosure provides an improved design of the cutting tool with the support surface (alternatively, an anvil support) and the element for cutting, pruning, shearing, and the like. A simple and cost-effective design of the cutting tool allows a user to perform cutting operations on dry branches and fresh branches with the single cutting tool. The compact design of the cutting tool includes the rotatable element which can be secured in an element housing when using cutting tool in a first configuration for the first cutting action. Further, the element is provided with engagement features such as a pin and a hook which are ergonomically designed for ease of rotatable movement of the element.

According to an embodiment of the present disclosure, the second handle portion defines a element housing such that the element is rotatably movable to house therein. This arrangement provides a compact design and storage space for the rotatable element.

According to an embodiment of the present disclosure, the support surface is the anvil support which is an integral part of the second lever. This arrangement provides a simple and cost-effective design for the second cutting action by the cutting tool.

According to an embodiment of the present disclosure, the first cutting action is a cutting action similar to one performed by the anvil secateurs, where a cutting blade and a anvil act together during the cutting action. The first cutting action is used to cut old, dry, and thick branches.

According to the invention, the second cutting action is a cutting action similar to one performed by the bypass secateurs, where one cutting blade bypasses the adjacent part on the other leaver during the cutting action. The second cutting action is used to cut fresh, and thin branches.

According to an embodiment of the present disclosure, the cutting tool includes a battery of a drive unit is housed within the second handle portion. The element is rotatably movable to house within the element housing by the drive unit. Further, the drive unit provides the mechanical advantage to rotatably switch the position of the element in and out of the element housing, between a first position and a second position.

According to an embodiment of the present disclosure, the element includes one or more of engagement features such as a pin and a hook. The engagement features allow rotatable movement of the element. The ergonomically designed pin and hook allows easy, safe, and user-friendly rotatable movement of the element.

According to an embodiment of the present disclosure, the engagement features of the element are defined around one or more of the support surface of the second blade, and the pivot point. This arrangement provides a user-friendly element arrangement which may be rotated in and out of the element housing to use the cutting tool in the first configuration or in the second configuration.

Other features and aspects of this disclosure will be apparent from the following description and the accompanying drawings.

### BRIEF DESCRIPTION OF THE DRAWINGS

The disclosure will be described in more detail with reference to the enclosed drawings, wherein:
**FIG. 1** illustrates a perspective view of a cutting tool, according to an embodiment of the present disclosure;
**FIG. 2** illustrates an exploded view of the cutting tool, according to an embodiment of the present disclosure;
**FIG. 3A** illustrates a perspective view of a second lever and an element of a cutting tool, the element being in a first position, according to an embodiment of the present disclosure;
**FIG. 3B** illustrates a perspective view of the second lever and the element in a second position, according to an embodiment of the present disclosure;
**FIG. 3C** illustrates a perspective view of the second lever and the element in a third position, according to an embodiment of the present disclosure;
**FIG. 4** illustrates a perspective view of the cutting tool in a first configuration, according to an embodiment of the present disclosure;
**FIG. 5** illustrates a perspective view of the cutting tool in a second configuration, according to an embodiment of the present disclosure;
**FIG. 6** illustrates a perspective view of the cutting tool in a third configuration, according to an embodiment of the present disclosure;
**FIG. 7A** illustrates a side view of the cutting tool in the first configuration, according to an embodiment of the present disclosure;
**FIG. 7B** illustrates a side view of the cutting tool in the second configuration, according to an embodiment of the present disclosure; and
**FIG. 8** illustrates an exploded view of the cutting tool, according to another embodiment of the present disclosure.

### DESCRIPTION OF EMBODIMENTS

The present disclosure will be described more fully hereinafter with reference to the accompanying drawings, in which example embodiments of the disclosure incorporating one or more aspects of the present disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. For example, one or more aspects of the present disclosure may be utilized in other embodiments and even other types of structures and/or methods. In the drawings, like numbers refer to like elements.

Certain terminology is used herein for convenience only and is not to be taken as a limitation on the disclosure. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

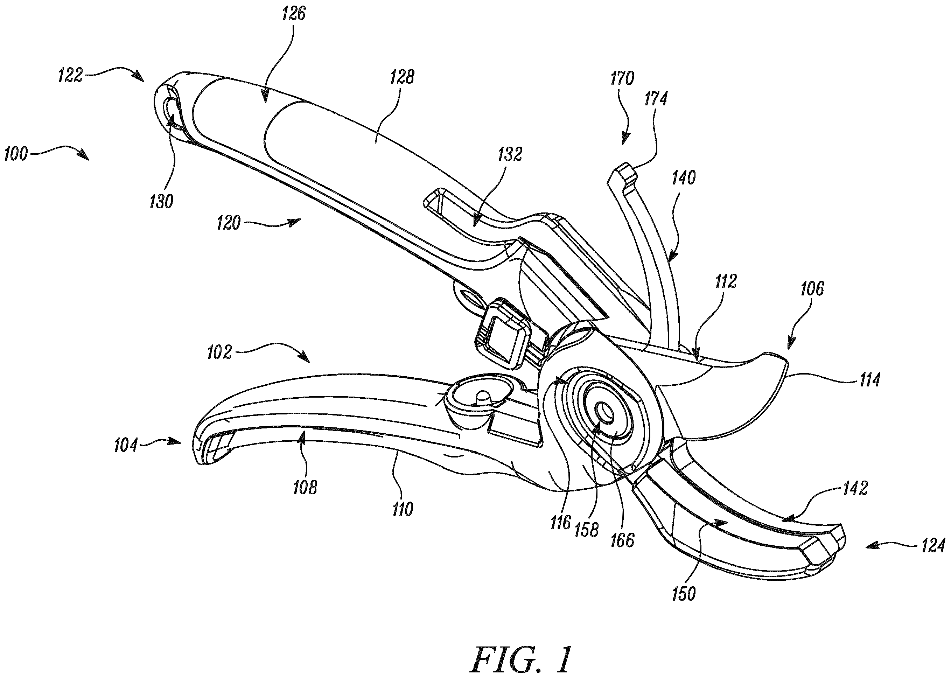

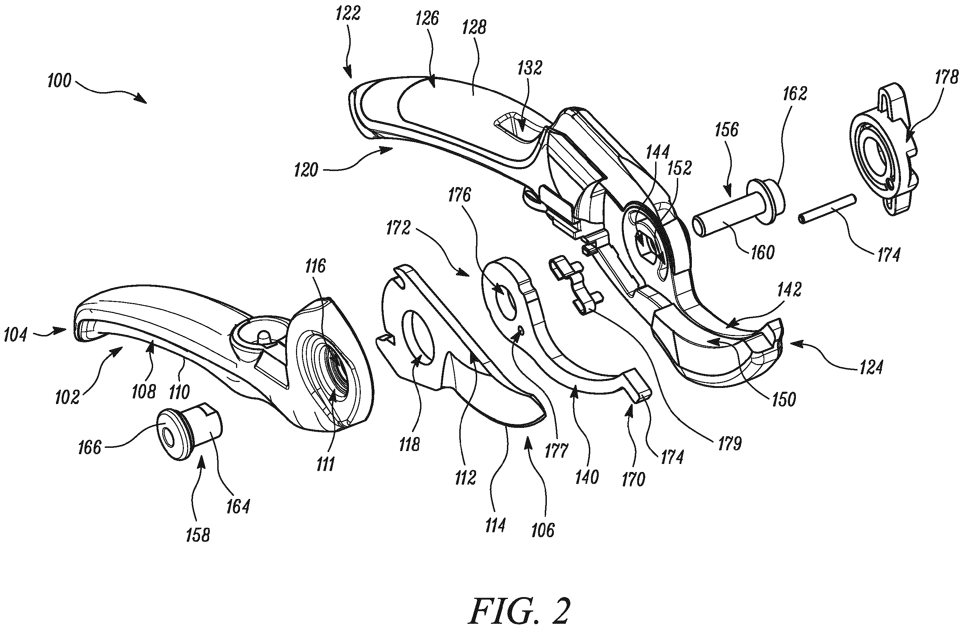

**FIG. 1** illustrates a cutting tool **100.** The cutting tool **100** of the present disclosure is illustrated as a secateur, however, the present disclosure may be readily applied to any cutting tool such as, but not limited to, a lopper, shear, scissor etc. The cutting tool **100** includes a first lever **102** having a first end **104** and a second end **106.** The first lever **102** defines a first handle portion **108** towards the first end **104** of the first lever **102.** The first handle portion **108** of the first lever **102** includes a first gripping portion **110** to firmly grip the first lever **102.** The first lever also defines a first rivet hole **111** (shown in **FIG. 2**). The first lever **102** is generally made up of a durable material, such as a wear resistant plastic, a metal alloy, and the like. It should be noted that the material of the first lever **102** does not limit the scope of the present disclosure.

The cutting tool **100** also includes a first cutting blade **112** fixedly coupled to the first lever **102** proximate the second end **106** of the first lever **102.** In some embodiments, the first cutting blade **112** may be an integral part of the first lever **102.** The first cutting blade **112** is generally manufactured using an alloy steel. The cutting tool **100** further includes a first cutting edge **114** defined by the first lever **102** between a pivot point **116** and the second end **106** of the first lever **102.** The first cutting blade **112** includes a second rivet hole **118** (as shown in **FIG. 2**).

The cutting tool **100** includes a second lever **120** having a first end **122** and a second end **124.** The second lever **120** defines a second handle portion **126** towards the first end **122** of the second lever **120.** The second handle portion **126** of the second lever **120** includes a second gripping portion **128** to firmly grip the second lever **120.** The second lever **120** is generally made up of a durable material, such as a wear resistant plastic, a metal alloy, and the like. It should be noted that the material of the second lever **120** does not limit the scope of the present disclosure. The second lever **120** also defines an eye portion **130** at the first end **122** of the second lever **120.** The eye portion **130** may be used to tie the cutting tool **100** with a rope, a string, a chain, and the like. This arrangement of the cutting tool **100** (i.e., the eye portion **130**) may allow ease of carrying the cutting tool **100** and avoid misplacement of the cutting tool **100.** Further, the second handle portion **126** defines an element housing **132** such that an element **140** is rotatably movable to house therein.

Referring to **FIGS. 1****,** **2****,** the cutting tool **100** also includes a second cutting blade **142** fixedly coupled to the second lever **120** proximate the second end **124** of the second lever **120.** In the illustrated embodiment, the second cutting blade **142** may be an integral part of the second lever **120.** The second cutting blade **142** is generally manufactured using an alloy steel. The second cutting blade **142** includes a third rivet hole **144.** In some embodiments, the second cutting blade **142** may be coupled to the second lever **120** proximate the second end **124** of the second lever **120** by a number of mechanical fasteners (not shown). Further, the mechanical fasteners may include any type of mechanical joint, such as bolted joint, screwed joint, riveted joint, and the like. It should be noted that the type of coupling of the second cutting blade **142** with the second lever **120** does not limit the scope of the present disclosure. In some embodiments, the second cutting blade **142** may include a number of first through holes (not shown) to receive a number of mechanical fastening elements (not shown).

The second cutting blade **142** defines an anvil support **150** (alternatively, a support surface **150**). The anvil support **150** is generally made up of a wear resistant and durable metal alloy. In the illustrated embodiment, the anvil support **150** is an integral part of the second blade **142.** In some embodiments, the anvil support **150** may include a number of second through holes (not shown) to receive the number of mechanical fastening elements. Further, the mechanical fastening elements may include any type of mechanical joint, such as bolted joint, screwed joint, riveted joint, and the like. It should be noted that the type of coupling of the anvil support **150** with the second cutting blade **142**does not limit the scope of the present disclosure. The second blade **142** defines a semicircular slot **152** proximate the pivot point **116.**

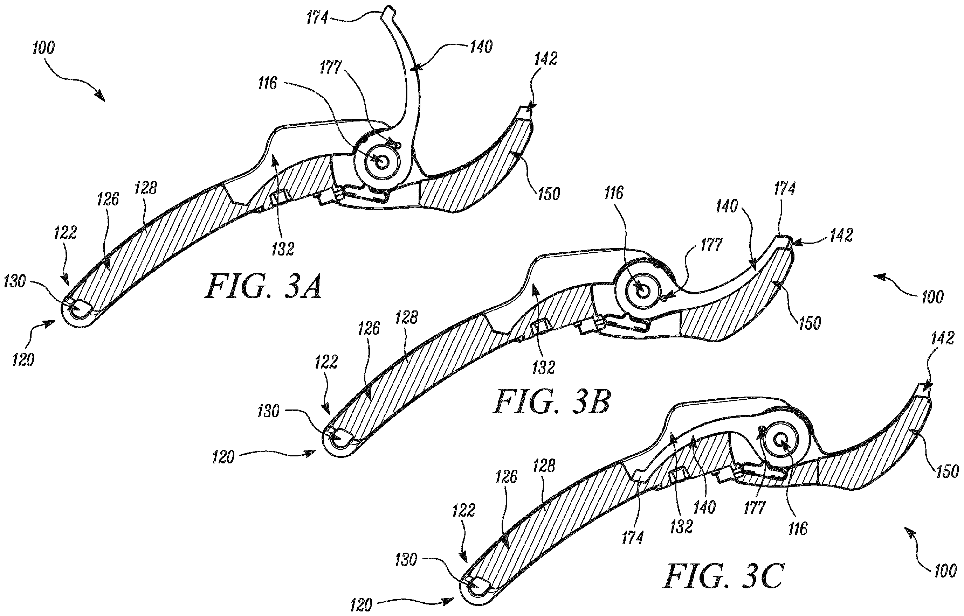

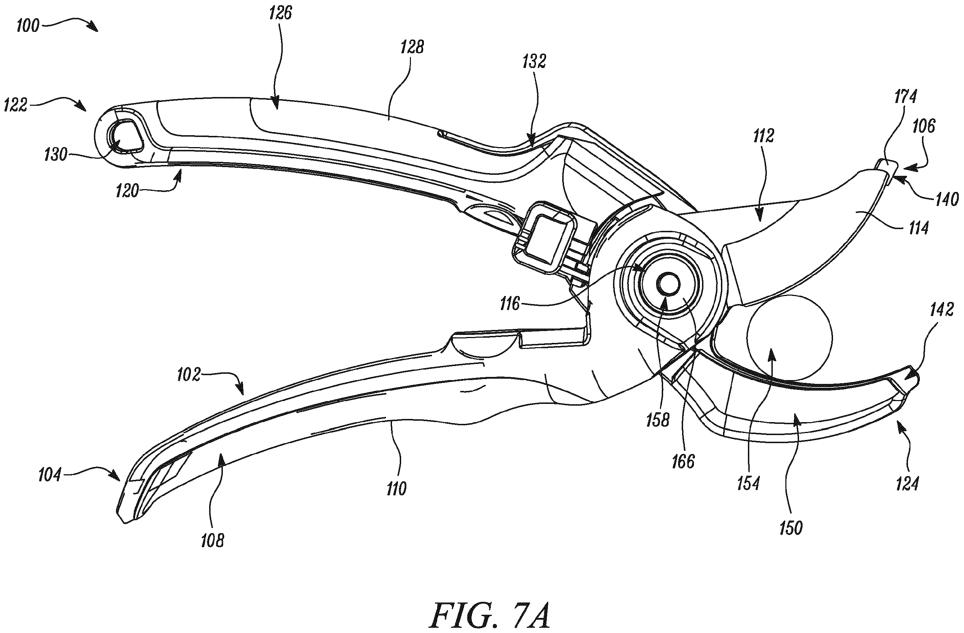

The cutting tool **100** includes the support surface **150** defined by the second lever **120** between the pivot point **116** and the second end **124** of the second lever **120** such that the first cutting edge **114** and the support surface **150** perform a first cutting action therebetween. Further, the support surface **150** is the anvil support **150** which is an integral part of the second lever **120.** The first cutting edge **114** and the support surface **150** performs the cutting of a first branch **154** (as shown in **FIG. 7A**). Further, the first cutting action is a cutting action similar to one performed by the anvil secateurs. The first branch **154** may generally include an old, dry, and thicker branch **154.** Further, the cutting of the first branch **154** may be done in a first configuration (as shown in **FIGS. 3A****,** **4****,** **7A**). In the first configuration, the first cutting action is primarily performed by the first cutting edge **114** and the support surface **150,** while the element **140** remains away from the support surface **150** and the element housing **132** as best shown in **FIG. 7A****.**

The second lever **120** is pivotally coupled to the first lever **102** at the pivot point **116.** In the illustrated example, the pivot point **116** includes a riveted joint. The riveted joint includes a first rivet element **156** and a second rivet element **158.** In other embodiments, the pivot point **116** may include any mechanical joint, such as a bolted joint, a screwed joint, and the like. The first rivet element **156** defines a solid cylindrical body **160** and a first head portion **162.** Further, the second rivet element **158** includes a hollow cylindrical body **164** and a second head portion **166,** such that the hollow cylindrical body **164** of the second rivet element **158** receives the solid cylindrical body **160** of the first rivet element **156.** The pivot point **116** may include a washer element (not shown) disposed between the first rivet element **156** and the second cutting blade **142.**

The cutting tool **100** includes the element **140** rotatably coupled with one or more of the first lever **102** and the second lever **120** such that the element **140** removably rests on the support surface **150** of the second lever **120.** The element **140** may include a bypass blade. The element **140** is generally made up of a wear resistant and durable metal alloy. The element **140** includes a first end portion **170** and a second end portion **172.** The element **140** defines a protruding part **174** (alternatively, engagement features **174**) proximate the first end portion **170.** The protruding part **174** may be used for switching the position of the element **140** between the first configuration, the second configuration, and the third configuration of the cutting tool **100.** The element **140** also defines a fourth rivet hole **176** to receive the first rivet element **156,** and the second rivet element **158.** The element **140** further defines a pin hole **177** proximate the fourth rivet hole **176.**

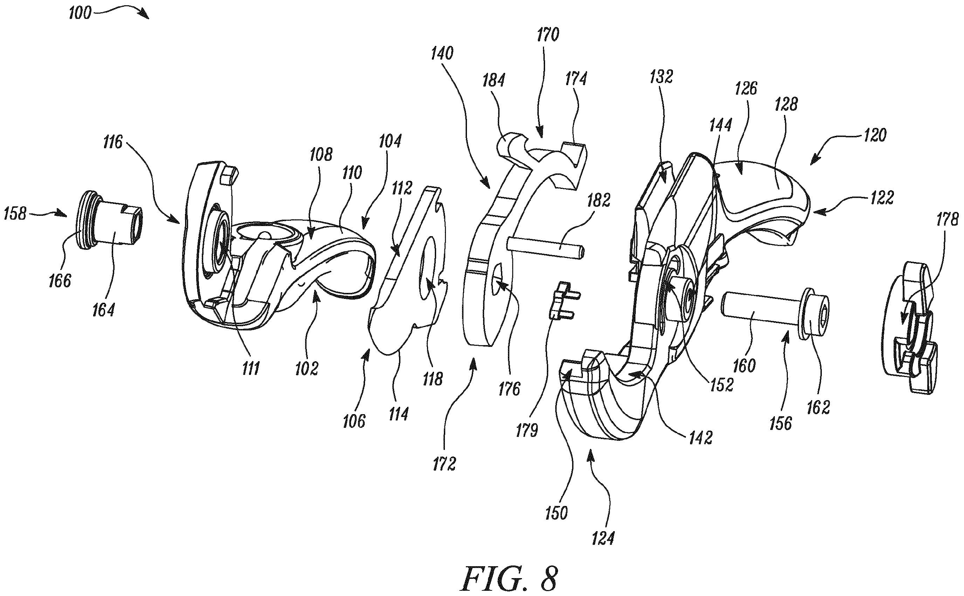

The element **140** also includes one or more of engagement features **174** such as a pin **182** and a hook **184** (as shown in **FIG. 8**). The engagement features **174** allow rotatable movement of the element **140.** In the illustrated embodiment, the cutting tool **100** includes a knob **178** which is operatively coupled to the element **140,** such that the knob **178** receives the pin **182.** The knob **178** and pin **182** may be connected by a snap-fit connection, a push-fit connection, and the like. Further, the pin **182** is coupled to the element **140** through a pin member **179.** In some embodiments, the engagement features **174** such as the pin **182** and the hook **184** of the element **140** are defined around one or more of a support surface **150** of the anvil support **150,** and the pivot point **116.** Further, the semicircular slot **152** of the second cutting blade **142** receives the pin **182** therein. The pin **182** may move along the semicircular slot **152,** during movement of the element **140** between the first configuration, the second configuration, and the third configuration.

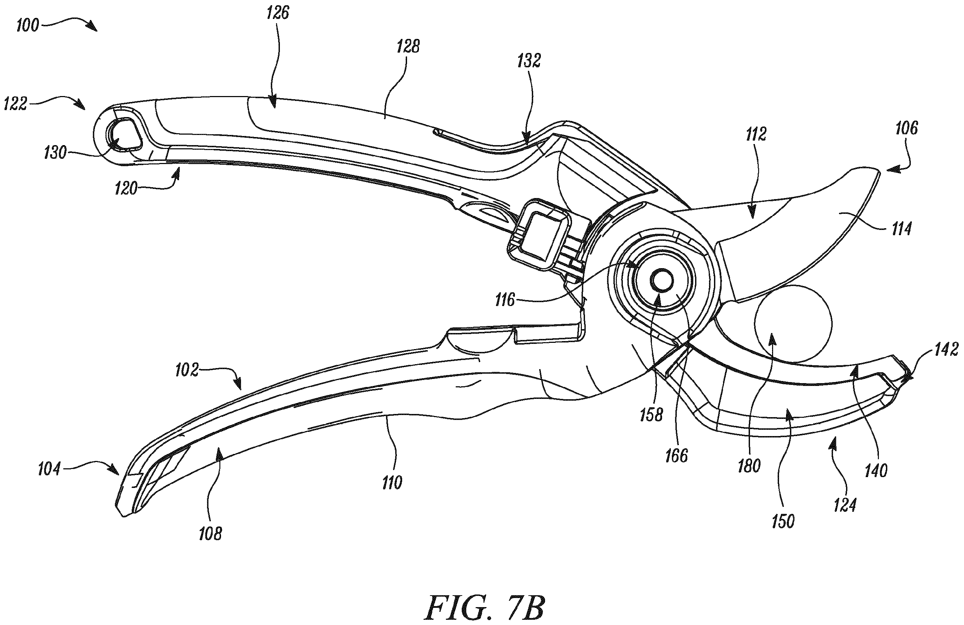

The first cutting edge **114** and the element **140** perform a second cutting action therebetween when the element **140** rests on the support surface **150** of the second lever **120.** The first cutting edge **114** and the element **140** performs cutting of a second branch **180** (as shown in **FIG. 7B**). Further, the second cutting action is a cutting action similar to one performed by the bypass secateurs. The second branch **180** may generally be a fresh, and thinner branch. Further, the cutting of the second branches **180** may be done in the second configuration (as shown in **FIGS. 3B****,** **5****,** **7B**). In the second configuration, the second cutting action is primarily performed by the first cutting edge **114** and the element **140,** as best shown in **FIG. 7B****.**

**FIGS. 3A, 3B, 3C****,** illustrates various positions of the element **140.** In **FIG. 3A****,** the element **140** is in a first position. Similarly, in **FIG. 3B** and **FIG. 3C****,** the element **140** is in a second position and a third position, respectively. Further, **FIGS. 3A, 3B, 3C****,** allow to appreciate movement and position of the element **140** in the element housing **132** for the first configuration, the second configuration, and the third configuration of the cutting tool **100.**

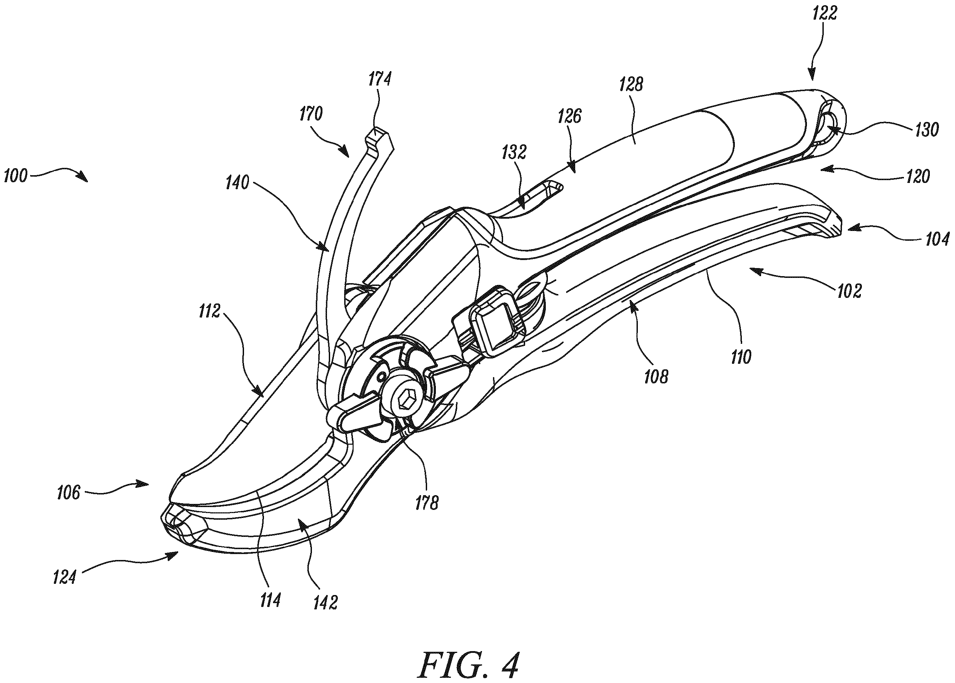

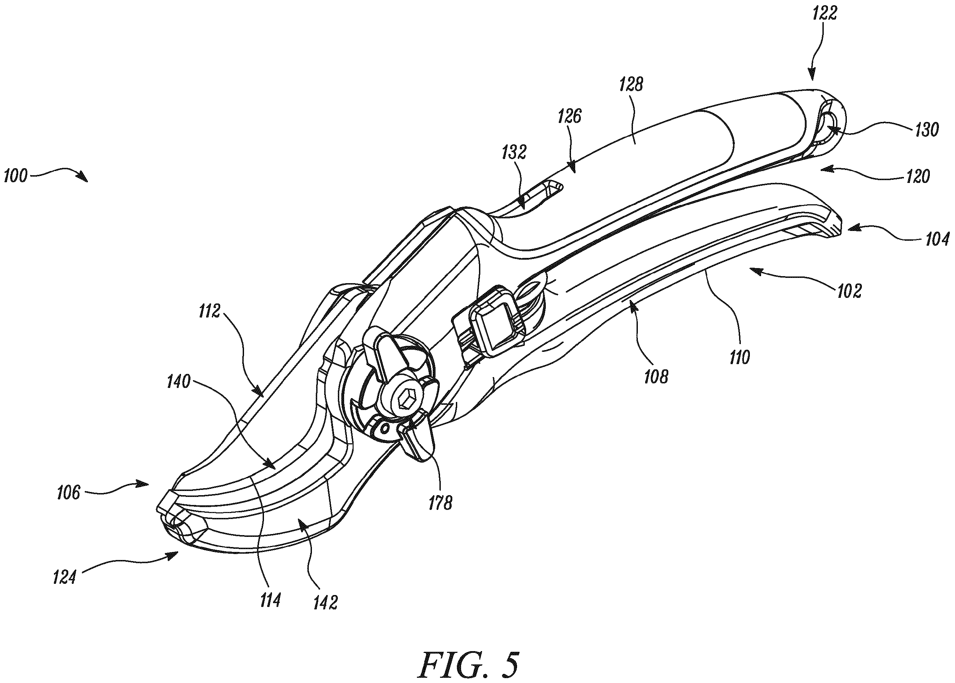

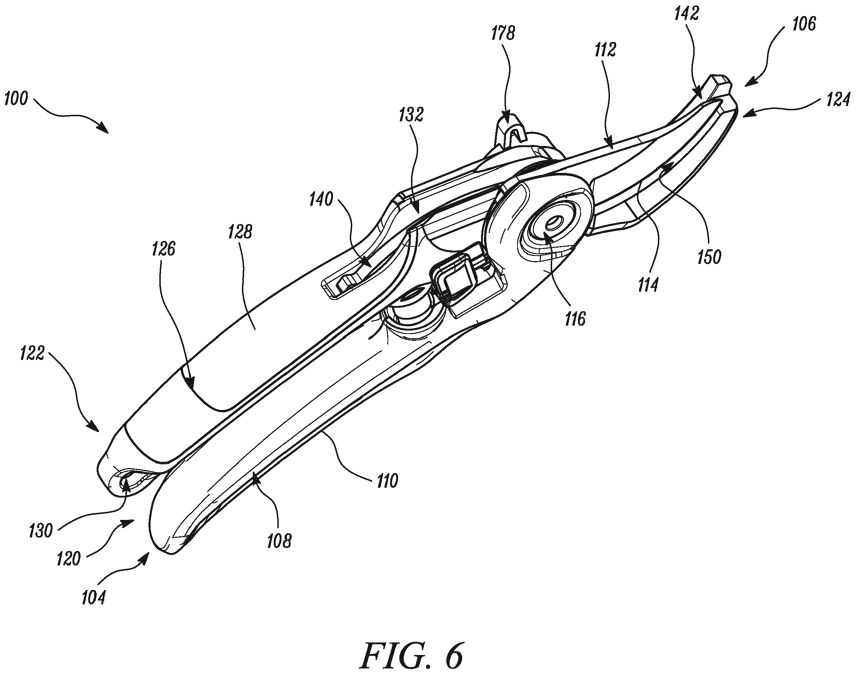

**FIG. 4** illustrates the element **140** in the first position. In the first position, the knob **178** keeps the element **140** away from the element housing **132,** and the cutting tool **100** operates in the first configuration. **FIG. 5****,** illustrated the element **140**in the second position. In the second position, the knob **178** positions the element **140** with the support surface **142** and away from the element housing **132,** so the cutting tool **100** operates in the second configuration. **FIG. 6****,** illustrates the element **140** in the third position. In the third position of the element **140,** the cutting tool **100** operates in the third configuration, where the element **140** remains housed in the element housing **132,** and the cutting action may be performed similar to the first configuration i.e., between the first cutting edge **114** and the support surface **150.** Further, rotation of the knob **178** allows switching the cutting tool **100** between the first configuration, the second configuration, and the third configuration. The knob **178** may be rotated to move the element **140** in and out from the element housing **132.** In some embodiments, the cutting tool **100** may be operated without application of the knob **178.** Without the knob **178,** the pin **182** may be rotated to switch the cutting tool **100** between the first configuration, the second configuration, and the third configuration.

Referring to **FIG. 7A****,** the element **140** is rotatably coupled to the one or more of the first lever **102** and the second lever **120.** In the first configuration, the element **140** remains outside the element housing **132** of the second lever **120.** Further, in the first configuration of the element **140,** the cutting tool **100** is used for cutting the first branches **154** with enhanced cutting force between the first cutting edge **114** and the support surface **150.** Referring to **FIG. 7B****,** in the second configuration, the element **140** rests on the support surface **150** of the second lever **120.** In the second configuration, the cutting tool **100** is used for cutting the second branches **180** with precision and accuracy, while the second cutting action is performed by the first cutting edge **114** and the element **140.**

The cutting tool **100** also includes a drive unit (not shown). The drive unit may be housed in the second handle portion **126.** The drive unit includes a battery (not shown). The battery of the drive unit is housed within the second handle portion **126.** The drive unit also includes a motor, a gearbox, a drum, and a printed circuit board assembly (PCBA). Further, the drive unit may be operatively coupled to one or more of the first cutting blade **112** and the second cutting blade **142.** The drive unit selectively provides a supplemental motor force to assist a movement of one or more of the first cutting blade **112** and the second cutting blade **142** to perform the cutting action. Further, the element **140** is rotatably movable to house within the element housing **132** by the drive unit. Moreover, the drive unit selectively provides the supplemental motor force to assist a movement of the element **140** to switch between the first position and the second position.

**FIG. 8** illustrates another embodiment of the cutting tool **100** in which the element **140** defines the hook 184. The hook **184** may be an integral part of the element **140** and disposed proximate the first end portion **170** of the element **140.** The hook **184** may be used to rotate the element **140** between the first position, the second position, and the third position corresponding to the first configuration, the second configuration, and the third configuration of the cutting tool **100.**

The present disclosure provides an improved design of the cutting tool **100** for cutting, pruning, and shearing different branches (say the small branches) in gardening application. A simple and cost-effective design of the cutting tool **100** allows a user to perform cutting operations on the first branches **154** as well as on the second branches **180** with the single cutting tool **100.** The compact design of the cutting includes the rotatable element **140** which can be secured in the element housing **132** and the cutting tool **100** may be used different configurations such as the first, and second configurations. Further, the element **140** is provided with the knob **178** and the engagement features **174** which is ergonomically designed for easy rotatable movement of the element **140.** Furthermore, the drive unit provides the mechanical advantage to assist cutting action by the element **140** and to rotatably switch the position of the element **140** between the first position and the second position.

In the drawings and specification, there have been disclosed preferred embodiments and examples of the disclosure and, although specific terms are employed, they are used in a generic and descriptive sense only and not for the purpose of limitation of the scope of the disclosure being set forth in the following claims.

### LIST OF ELEMENTS

- **100**: Cutting Tool
- **102**: First Lever
- **104**: First End of First Lever
- **106**: Second End of First Lever
- **108**: First Handle Portion
- **110**: First Gripping Portion
- **111**: Second Rivet Hole
- **112**: First Cutting Blade
- **114**: First Cutting Edge
- **116**: Pivot Point
- **118**: Second Rivet Hole
- **120**: Second Lever
- **122**: First End of Second Lever
- **124**: Second End of Second Lever
- **126**: Second Handle Portion
- **128**: Second Gripping Portion
- **130**: Eye Portion
- **132**: Element Housing
- **140**: Element
- **142**: Second Cutting Blade
- **144**: Third Rivet Hole
- **150**: Anvil Support/Support Surface
- **152**: Semicircular Slot
- **154**: First Branch
- **156**: First Rivet Element
- **158**: Second Rivet Element
- **160**: Solid Cylindrical Body
- **162**: First Head Portion
- **164**: Hollow Cylindrical Body
- **166**: Second Head Portion
- **170**: First End Portion
- **172**: Second End Portion
- **174**: Engagement Feature/Protruding Part
- **176**: Fourth Rivet Hole
- **177**: Pin Hole
- **178**: Knob
- **179**: Pin Member
- **180**: Second Branch
- **182**: Pin
- **184**: Hook

## Claims

1. A cutting tool **(100)** comprising:
a first lever **(102)** having a first end **(104)** and a second end **(106),** wherein the first lever **(102)** defines a first handle portion **(108)** towards the first end **(104)** of the first lever **(102);**
a second lever **(120)** having a first end **(122)** and a second end **(124),** wherein the second lever **(120)** defines a second handle portion **(126)** towards the first end **(122)** of the second lever **(120),** and wherein the second lever **(120)** is pivotally coupled to the first lever **(102)** at a pivot point **(116);**
a first cutting edge **(114)** defined by the first lever **(102)** between the pivot point **(116)** and the second end **(106)** of the first lever **(102);**
a support surface **(150)** defined by the second lever **(120)** between the pivot point **(116)** and the second end **(124)** of the second lever **(120)** such that the first cutting edge **(114)** and the support surface **(150)** are adapted to perform a first cutting action therebetween;
an element **(140)** rotatably coupled with one or more of the first lever **(102)** and the second lever **(120)** such that the element **(140)** removably rests on the support surface **(150)** of the second lever **(120);** and
**characterized in that:**
the first cutting edge **(114)** and the element **(140)** are adapted to perform a second cutting action therebetween when the element **(140)** rests on the support surface **(150)** of the second lever **(120);** and
wherein the second cutting action is a cutting action similar to one performed by the bypass secateurs, where one cutting blade bypasses the adjacent part on the other lever during the cutting action.

2. The cutting tool **(100)** of claim **1,** wherein the second handle defines a element housing **(132)** such that the element **(140)** is rotatably movable to house therein.

3. The cutting tool **(100)** of claim **1,** wherein the support surface **(150)** is an anvil support **(150)** which is an integral part of the second lever **(120).**

4. The cutting tool **(100)** of any of the preceding claims, wherein the first cutting action is a cutting action similar to one performed by the anvil secateurs, where a cutting blade and an anvil act together during the cutting action.

5. The cutting tool **(100)** of claim **2,** wherein the cutting tool **(100)** includes a battery of a drive unit that is housed within the second handle **(126),** wherein the element **(140)** is rotatably movable to be housed within the element housing **(132)** by the drive unit.

6. The cutting tool **(100)** of claim **2,** wherein the element **(140)** includes one or more of engagement features **(174)** such as a pin **(182)** and a hook **(184),** wherein the engagement features **(174)** allow rotatable movement of the element **(140).**

7. The cutting tool **(100)** of claim **6,** wherein the engagement features **(174)** of the element **(140)** are defined around one or more of the support surface **(150)** of the anvil support **(150)** and the pivot point **(116).**

## Patentansprüche

1. Schneidwerkzeug **(100),** umfassend:
einen ersten Hebel **(102),** der ein erstes Ende **(104)** und ein zweites Ende **(106)** aufweist, wobei der erste Hebel **(102)** einen ersten Griffabschnitt **(108)** zu dem ersten Ende **(104)** des ersten Hebels **(102)** hin definiert;
einen zweiten Hebel **(120),** der ein erstes Ende **(122)** und ein zweites Ende **(124)** aufweist, wobei der zweite Hebel **(120)** einen zweiten Griffabschnitt **(126)** zu dem ersten Ende **(122)** des zweiten Hebels **(120)** hin definiert, und wobei der zweite Hebel **(120)** mit dem ersten Hebel **(102)** an einem Schwenkpunkt **(116)** schwenkbar gekoppelt ist;
eine erste Schneidkante **(114),** die durch den ersten Hebel **(102)** zwischen dem Schwenkpunkt **(116)** und dem zweiten Ende **(106)** des ersten Hebels **(102)** definiert wird;
eine Stützoberfläche **(150),** die durch den zweiten Hebel **(120)** zwischen dem Schwenkpunkt **(116)** und dem zweiten Ende **(124)** des zweiten Hebels **(120)** derart definiert ist, dass die erste Schneidkante **(114)** und die Stützoberfläche **(150)** angepasst sind, um einen ersten Schneidvorgang dazwischen durchzuführen;
ein Element **(140),** das mit einem oder mehreren von dem ersten Hebel **(102)** und dem zweiten Hebel **(120)** derart drehbar gekoppelt ist, dass das Element **(140)** auf der Stützoberfläche **(150)** des zweiten Hebels **(120)** entfernbar ruht; und
**dadurch gekennzeichnet, dass:**
die erste Schneidkante **(114)** und das Element **(140)** angepasst sind, um einen zweiten Schneidvorgang dazwischen durchzuführen, wenn das Element **(140)** auf der Stützoberfläche **(150)** des zweiten Hebels **(120)** ruht; und
wobei der zweite Schneidvorgang ein Schneidvorgang ähnlich dem ist, der durch die Bypass-Gartenschere durchgeführt wird, bei dem eine Schneidklinge während des Schneidvorgangs das angrenzende Teil an dem anderen Hebel umgeht.

2. Schneidwerkzeug **(100)** nach Anspruch **1,** wobei der zweite Griff ein Elementgehäuse **(132)** derart definiert, dass das Element **(140)** drehbar beweglich ist, um es darin aufzunehmen.

3. Schneidwerkzeug **(100)** nach Anspruch **1,** wobei die Stützoberfläche **(150)** eine Ambossstütze **(150)** ist, die ein integrales Teil des zweiten Hebels **(120)** ist.

4. Schneidwerkzeug **(100)** nach einem der vorstehenden Ansprüche, wobei der erste Schneidvorgang ein Schneidvorgang ähnlich dem ist, der durch die Ambossgartenschere durchgeführt wird, bei dem eine Schneidklinge und ein Amboss während des Schneidvorgangs zusammenwirken.

5. Schneidwerkzeug **(100)** nach Anspruch **2,** wobei das Schneidwerkzeug **(100)** eine Batterie einer Antriebseinheit einschließt, die innerhalb des zweiten Griffs **(126)** aufgenommen ist, wobei das Element **(140)** drehbar beweglich ist, um durch die Antriebseinheit innerhalb des Elementgehäuses **(132)** aufgenommen zu werden.

6. Schneidwerkzeug **(100)** nach Anspruch **2,** wobei das Element **(140)** eines oder mehrere von Eingriffsmerkmalen **(174),** wie einen Stift **(182)** und einen Haken **(184),** einschließt, wobei die Eingriffsmerkmale **(174)** eine drehbare Bewegung des Elements **(140)** ermöglichen.

7. Schneidwerkzeug **(100)** nach Anspruch **6,** wobei die Eingriffsmerkmale **(174)** des Elements **(140)** um eines oder mehrere von der Stützoberfläche **(150)** der Ambossstütze **(150)** und dem Schwenkpunkt **(116)** herum definiert sind.

## Revendications

1. Outil de coupe **(100)** comprenant :
un premier levier **(102)** ayant une première extrémité **(104)** et une seconde extrémité **(106),** dans lequel le premier levier **(102)** définit une première portion de poignée **(108)** vers la première extrémité **(104)** du premier levier **(102)** ;
un second levier **(120)** ayant une première extrémité **(122)** et une seconde extrémité **(124),** dans lequel le second levier **(120)** définit une seconde portion de poignée **(126)** vers la première extrémité **(122)** du second levier **(120),** et dans lequel le second levier **(120)** est accouplé de manière pivotante au premier levier **(102)** au niveau d'un point de pivotement **(116)** ;
un premier bord de coupe **(114)** défini par le premier levier **(102)** entre le point de pivotement **(116)** et la seconde extrémité **(106)** du premier levier **(102)** ;
une surface de support **(150)** définie par le second levier **(120)** entre le point de pivotement **(116)** et la seconde extrémité **(124)** du second levier **(120),** de telle sorte que le premier bord de coupe **(114)** et la surface de support **(150)** sont adaptés pour effectuer une première action de coupe entre eux ;
un élément **(140)** accouplé de manière rotative à un ou plusieurs leviers parmi le premier levier **(102)** et le second levier **(120),** de telle sorte que l'élément **(140)** repose de manière amovible sur la surface de support **(150)** du second levier **(120)** ; et
**caractérisé en ce que** :
le premier bord de coupe **(114)** et l'élément **(140)** sont adaptés pour effectuer une seconde action de coupe entre eux lorsque l'élément **(140)** repose sur la surface de support **(150)** du second levier **(120)** ; et
dans lequel la seconde action de coupe est une action de coupe similaire à celle effectuée par les sécateurs à lames franches, où une lame de coupe contourne la partie adjacente sur l'autre levier pendant l'action de coupe.

2. Outil de coupe **(100)** selon la revendication **1,** dans lequel la seconde poignée définit un logement d'élément **(132)** de telle sorte que l'élément **(140)** est mobile de manière rotative pour se loger dedans.

3. Outil de coupe **(100)** selon la revendication **1,** dans lequel la surface de support **(150)** est un support d'enclume **(150)** qui fait partie intégrante du second levier **(120).**

4. Outil de coupe **(100)** selon l'une quelconque des revendications précédentes, dans lequel la première action de coupe est une action de coupe similaire à celle effectuée par les sécateurs à enclume, où une lame de coupe et une enclume agissent ensemble pendant l'action de coupe.

5. Outil de coupe **(100)** selon la revendication **2,** dans lequel l'outil de coupe **(100)** comporte une batterie d'une unité d'entraînement qui est logée à l'intérieur de la seconde poignée **(126),** dans lequel l'élément **(140)** est mobile de manière rotative pour être logé dans le logement d'élément **(132)** par l'unité d'entraînement.

6. Outil de coupe **(100)** selon la revendication **2,** dans lequel l'élément **(140)** comporte une ou plusieurs caractéristiques de mise en prise **(174)** telles qu'une goupille **(182)** et un crochet **(184),** dans lequel les caractéristiques de mise en prise **(174)** permettent un mouvement rotatif de l'élément **(140).**

7. Outil de coupe **(100)** selon la revendication **6,** dans lequel les caractéristiques de mise en prise **(174)** de l'élément **(140)** sont définies autour d'une ou plusieurs des surfaces de support **(150)** du support d'enclume **(150)** et du point de pivotement **(116).**
